# EUROPÄISCHE PATENTANMELDUNG

(11) **EP 2 538 033 A1**
(43) Veröffentlichungstag der Anmeldung: **26.12.2012**
(21) Anmeldenummer: 11170706.3
(22) Anmeldetag: 21.06.2011
(51) Int. Cl.: F01D 15/10, F01D 19/00

(54) **Verfahren zum Anfahren einer stationären Gasturbine**

(71) Anmelder: Siemens Aktiengesellschaft, 80333 München (DE)
(72) Erfinder: Deuker, Eberhard, 45481 Mülheim an der Ruhr (DE); Engler, Thorsten, 47447 Moers (DE)

(57) **Zusammenfassung**

Die Erfindung betrifft ein Verfahren zum Anfahren einer stationären Gasturbine (10) mit einem Verdichter (18), einer Turbineneinheit (24) und einem Rotor (14), welcher von einem externen Drehantrieb aus dem Stand bis zu einer vorbestimmten Rotordrehzahl antreibbar ist, mit den Schritten:
- Drehen bzw. Antreiben des Rotors (14) durch einen externen Drehantrieb mit einem Antriebs-Drehmoment,
- Zünden von Brennstoff innerhalb der Gasturbine (10) bei einer ersten Rotordrehzahl und Weiterbetrieb der Verbrennung des der Gasturbine (10) kontinuierlich zugeführten Brennstoffs zu einem Heißgas (M), wobei währenddessen ein von der Heißgas-Strömung in der Turbineneinheit (24) und der Luft-Strömung im Verdichter (18) abhängiges Gasturbinen-Drehmoment auf den Rotor (14) einwirkt sowie
- Abschalten des Drehantriebs bei einer vorbestimmten Rotordrehzahl, wodurch der Rotor (14) nur noch durch das bei der Verbrennung erzeugte Heißgas (M) angetrieben wird.

Um ein frühzeitigeres Erreichen der Nenndrehzahl der Gasturbine beim Anfahren der Gasturbine (10) aus dem Stand zu erreichen oder um Verbrennungsschwingungen und den Druck im Brennstoffversorgungssystem zu verringern, ist erfindungsgemäß vorgesehen, dass die vorbestimmte Rotordrehzahl größer ist als das 0,8-fache der Nenndrehzahl (n₀) des Rotors (14).

## Beschreibung

Die Erfindung betrifft ein Verfahren zum Anfahren einer stationären Gasturbine mit einem Verdichter, einer Turbineneinheit und einem Rotor, welcher von einem externen Drehantrieb aus dem Stand bis zu einer vorbestimmten Rotordrehzahl antreibbar ist, mit den Schritten:
- Drehen des Rotors durch den externen Drehantrieb mit einem Antriebs-Drehmoment,
- Zünden von Brennstoff innerhalb der Gasturbine bei einer ersten Rotordrehzahl und Weiterbetrieb der Verbrennung des der Gasturbine kontinuierlich zugeführten Brennstoffs zu einem Heißgas, wobei währenddessen ein von der Heißgas-Strömung in der Turbineneinheit und von der Luft-Strömung im Verdichter abhängiges Gasturbinen-Drehmoment zusätzlich auf den Rotor einwirkt sowie
- Abschalten des Drehantriebs bei der vorbestimmten Rotordrehzahl.

Stationäre Gasturbinen und Verfahren zum Betrieb der Gasturbinen sind aus dem verfügbaren Stand der Technik in umfangreicher Art und Weise bekannt. Gasturbinen moderner Bauart, welche zur Erzeugung elektrischer Energie eingesetzt werden, weisen in der Regel einen axial durchströmbaren Verdichter, eine oder mehrere Brennkammern und eine Turbineneinheit auf. Im Betrieb wird ein der Brennkammer zugeführter Brennstoff mit Hilfe der vom Verdichter verdichteten Umgebungsluft zu einem Heißgas verbrannt, welches sich in der Turbineneinheit an dem Rotor der Gasturbine arbeitsleistend entspannt. Der Rotor treibt dann einen Generator an, welcher die mechanische Energie in elektrische Energie verlustarm umwandelt und in ein Stromverteilungsnetz einspeist.

Beim Starten der Gasturbine - dem so genannten Anfahren oder Hochfahren - wird dessen Rotor mit Hilfe einer Antriebsvorrichtung auf eine Zünddrehzahl gebracht, wonach durch Einspeisen eines Pilot-Brennstoffstroms in die Brennkammer dieser gezündet wird. Anschließend zündet die Pilotflamme einen Haupt-Brennstoffstrom, welcher über separate Brenner und/oder Brennstoffdüsen auch in die Brennkammer(n) einspritzt wird. Gemäß dem Buch "Stationäre Gasturbinen" von Christoph Lechner und Jörg Seume (Herausgeber) wird die Antriebsvorrichtung bei einer Drehzahl von 50% bis 80% der Nenndrehzahl vom Rotor entkoppelt. Der Rotor wird dann nur noch von dem bei der Verbrennung entstehenden Heißgas beschleunigt. Mit Erreichen der Nenndrehzahl, zumeist 3000 min⁻¹ oder 3600 min⁻¹, endet der Startvorgang der Gasturbine. Anschließend kann der Generator mit der Netzfrequenz des Stromverteilungsnetzes synchronisiert und diesem aufgeschaltet werden.

Die Zuführung von Pilot-Brennstoff und Haupt-Brennstoff zu den entsprechenden Brennern bzw. Düsen erfolgt über getrennt arbeitende Leitungssysteme mit darin angeordneten Ventilen, mit denen sich das Volumen des jeweilig zugeführten Brennstoffs und dessen Druck einstellen lässt.

Als Brennstoff werden dabei sowohl flüssige als auch gasförmige Brennstoffe verwendet. Zur Erzeugung einer besonders effizienten und emissionsarmen Verbrennung in der Brennkammer ist es bekannt, die Verbrennung des Haupt-Brennstoffmassenstroms durch die Pilotflamme stetig zu unterstützen. Als Pilotbrennstoff wird häufig ein Brenngas, beispielsweise Erdgas verwendet.

Aufgrund der zur Erzeugung von großen Mengen an elektrischer Energie erforderlichen großen Mengen an gasförmigem Brennstoff sind die Brennstoffleitungssysteme der Gasturbine häufig an ein Brennstoffnetz angeschlossen, aus welchem dauerhaft der Brennstoff in der benötigten Menge über einen längeren Zeitraum entnommen werden kann. Ggf. ist zwischen dem Brennstoffnetz und dem Brennstoffleitungssystem noch ein zusätzlicher Gaskompressor geschaltet, um den Versorgungsdruck des Brennstoffnetzes zuverlässig auf ein höheres Maß anzuheben, mit dem ein sicherer Betrieb der Gasturbine gewährleistet werden kann. Der erforderliche Brennstoffdruck beim Einspeisen in die Brennkammer liegt dabei oberhalb des vom Verdichter der Gasturbine geleisteten Druckverhältnisses. Folglich wird der Brennstoffdruck so eingestellt, dass Brennstoff in der erforderlichen Menge auch tatsächlich in die Brennkammer einströmt. Der vom Brennstoffnetz bereitzustellenden bzw. vom zusätzlichen Gasverdichter zu liefernde Versorgungsdruck kann sogar weit oberhalb des vom Verdichter geleisteten Druckverhältnisses liegen, da insbesondere beim Beschleunigen des Rotors auf die Nenndrehzahl und bei Lastabwurf sehr große Mengen an Pilotbrennstoff benötigt werden, um die Hauptflamme zu stabilisieren und unerwünschte thermoakustische Schwingungen sowie Flammverlöschen sicher zu vermeiden. Pilotbrenner, welche eine vorgemischte Flamme erzeugen - so genannte Vormischpilotbrenner - weisen zudem vergleichsweise kleine Gasaustrittsbohrungen auf, welche eine weitere Erhöhung des ohnehin schon hohen Gasversorgungsdrucks erforderlich machen, um die geforderten Pilotgasmassenströme zu erreichen. Dies steht im Gegensatz zu dem Bedürfnis nach einer effizienten Betriebsmöglichkeit auch bei reduziertem Versorgungsdruck im Brennstoffnetz.

Aufgabe der Erfindung ist die Bereitstellung eines Verfahrens zum Anfahren einer stationären Gasturbine, welches besonders effizient und schnell durchführbar ist und bei dem die aus dem Stand der Technik bekannten Probleme verringert oder gar vermieden werden können.

Die auf das Verfahren zum Anfahren einer stationären Gasturbine gerichtete Aufgabe wird mit einem Verfahren gemäß den Merkmalen des Anspruchs 1 gelöst. Vorteilhafte Ausgestaltungen und Weiterbildungen der Erfindung sind in den Unteransprüchen angegeben.

Erfindungsgemäß ist vorgesehen, dass die vorbestimmte Rotordrehzahl größer ist als das 0,8-fache der Nenndrehzahl n₀ des Rotors.

Die Erfindung beruht auf der Erkenntnis, dass die Menge an Pilot-Brennstoff während des Anfahrens zur Beschleunigung des Rotors auf Nenndrehzahl verringert werden kann, wenn der Rotor trotz ausreichender Strömungskräfte des Heißgases weiterhin mit Hilfe des Drehantriebs angetrieben wird. Bisher wurde nämlich mit Erreichen diesen Zustands der Hilfsantrieb abgeschaltet, so dass der Rotor schon relativ frühzeitig nur noch aufgrund der Heißgasströmung weiter beschleunigte. Mit anderen Worten: der Rotor wird mit Hilfe des Drehantriebs länger als bisher angetrieben, um während des Anfahrprozesses weniger thermische Energie einsetzen zu müssen als bisher. Dies hat zur Folge, dass einerseits der Versorgungsdruck im Pilotgas-Brennstoff reduziert werden kann und gleichzeitig während des Hochfahrens dadurch Verbrennungsinstabilitäten vermieden werden können. Auch kann erreicht werden, dass sich die Anfahrdauer der stationären Gasturbinen weiter verkürzt. Die Nenndrehzahl des Rotors der Gasturbine kann somit eher erreicht werden, was die Verfügbarkeit der Gasturbine vergrößert und eine schnellere Bereitstellung von elektrischer Energie ermöglicht.

Ein weiterer Vorteil der Erfindung liegt im Verzicht auf den Einsatz von teuren und aufwändigen Komponenten zur Erhöhung des Versorgungsdrucks des Brenngases für Pilotbrenner, beispielsweise durch einen externen Gasverdichter oder einen Druckspeicher. Zudem können Startabbrüche vermieden werden, welche infolge hoher Beschleunigung der Brennkammer auftreten können und deren Ursache ein Mangel an Pilotgas ist. Ein besonderer Vorteil der Erfindung ist, dass an bestehenden Kraftwerken keine strukturellen Änderungen vorgenommen, sondern lediglich steuerungstechnische Änderungen durchgeführt werden müssen, um ein bestehendes Kraftwerk mit der Erfindung nachträglich auszurüsten. Darüber hinaus können mit dem Verfahren Emissionen während des Startens reduziert werden.

Vorzugsweise wird der Rotor solange vom Drehantrieb angetrieben, bis der Rotor seine Nenndrehzahl erreicht hat. Insbesondere dadurch kann die Startzeit wesentlich verkürzt werden bzw. der Versorgungsdruck im Brenngas weiter reduziert werden.

Vorzugsweise wird der Rotor von einem eigens dafür vorgesehenen Anfahrmotor angetrieben. Alternativ kann auch vorgesehen sein, dass der an den Rotor angekoppelte elektrische Generator, welcher im stationären Betrieb die von der Gasturbine bereitgestellte mechanische Energie in elektrische Energie umwandelt, den Gasturbinenrotor antreibt, so dass während des Anfahrens der Generator als elektrischer Motor betrieben wird. Dies hat den Vorteil, dass auf einen separaten Anfahrmotor verzichtet werden kann. Im letztgenannten Fall wird die Drehzahl des Generators durch einen Anfahrumrichter vorgegeben, indem dieser den üblicherweise als Synchronmaschine ausgebildeten Generator mit einer Versorgungsspannung mit einer variablen Frequenz versorgt, welche der gewünschten Drehzahl des Gasturbinenrotors dann entspricht.

Weitere Vorteile und Merkmale der Erfindung werden anhand einer Zeichnung näher erläutert. Es zeigen:
- FIG 1: eine Gasturbine in einem Längs-Teilquerschnitt,
- FIG 2: das erfindungsgemäße Verfahren in einem Blockschaltbild,
- FIG 3: ein Drehzahl-Drehmoment-Diagramm des Anfahrprozesses einer stationären Gasturbine.

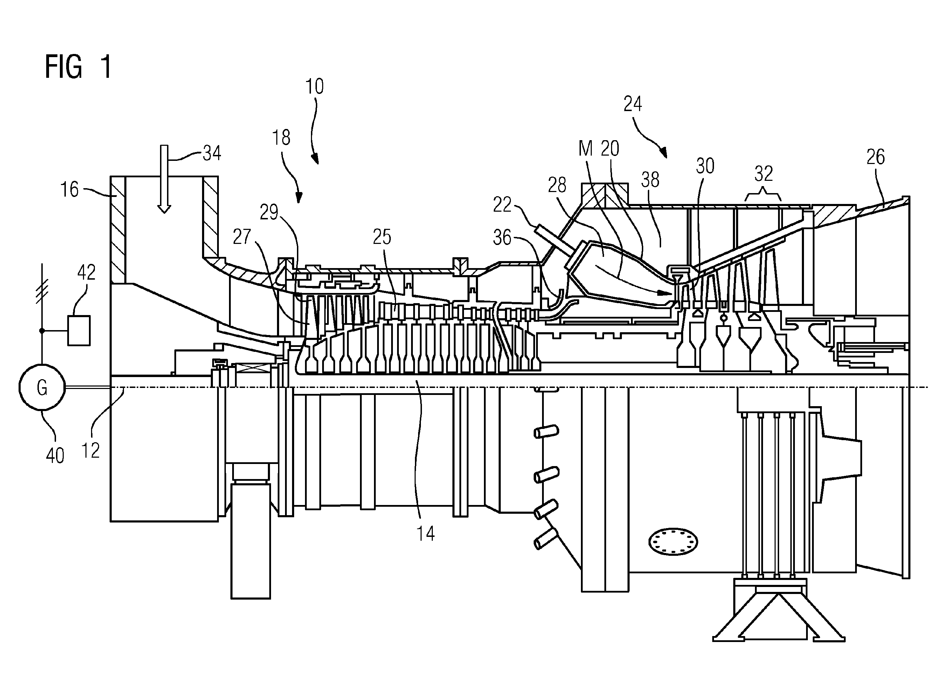

Figur 1 zeigt eine stationäre Gasturbine 10 in einem Längsteilschnitt. Die Gasturbine 10 weist im Innern einen um eine Rotationsachse 12 drehgelagerten Rotor 14 auf, der auch als Turbinenläufer bezeichnet wird. Entlang des Rotors 14 folgen aufeinander ein Ansauggehäuse 16, ein Axialturboverdichter 18, eine torusartige Ringbrennkammer 20 mit mehreren rotationssymmetrisch zueinander angeordneten Brennern 22, eine Turbineneinheit 24 und ein Abgasgehäuse 26.

Der Axialturboverdichter 18 umfasst einen ringförmig ausgebildeten Verdichterkanal 25 mit darin kaskadisch aufeinanderfolgenden Verdichterstufen aus Laufschaufel- und Leitschaufelkränzen. Die am Rotor 14 angeordneten Laufschaufeln 27 liegen mit ihren frei endenden Schaufelblattspitzen 29 einer äußeren Kanalwand 42 des Verdichterkanals 25 gegenüber. Der Verdichterkanal 25 mündet über einen Verdichterausgangsdiffusor 36 in einem Plenum 38. Darin ist die Ringbrennkammer 20 mit ihrem Verbrennungsraum 28 vorgesehen, der mit einem ringförmigen Heißgaskanal 30 der Turbineneinheit 24 kommuniziert. In der Turbineneinheit 24 sind vier hintereinander geschaltete Turbinenstufen 32 angeordnet. Am Rotor 14 ist ein Generator 40 oder eine Arbeitsmaschine angekoppelt.

Im Betrieb der Gasturbine 10 saugt der Axialturboverdichter 18 durch das Ansauggehäuse 16 als zu verdichtendes Medium Umgebungsluft 34 an und verdichtet diese. Die verdichtete Luft wird durch den Verdichterausgangsdiffusor 36 in das Plenum 38 geführt, von wo aus es in die Brenner 22 einströmt. Über die Brenner 22 gelangt auch Brennstoff in den Verbrennungsraum 28. Dort wird der Brennstoff unter Zugabe der verdichteten Luft zu einem Heißgas M verbrannt. Das Heißgas M strömt anschließend in den Heißgaskanal 30, wo es sich arbeitsleistend an den Turbinenschaufeln der Turbineneinheit 24 entspannt. Die währenddessen freigesetzte Energie wird vom Rotor 14 aufgenommen und einerseits zum Antrieb des Axialturboverdichters 18 und andererseits zum Antrieb des elektrischen Generators 40 genutzt.

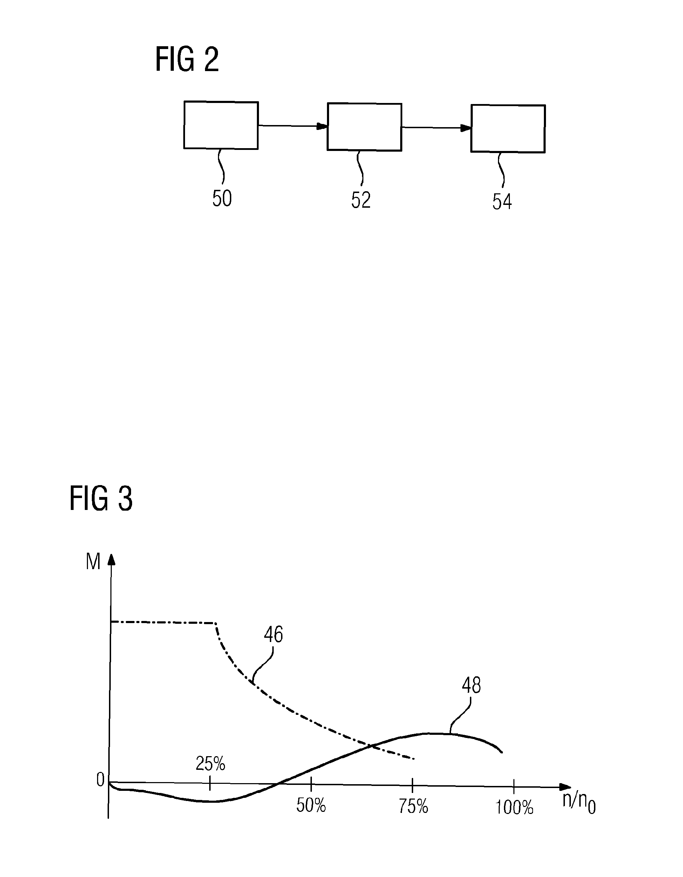

Zum Anfahren der stationären Gasturbine 10 wird gemäß der ersten Ausgestaltung der Erfindung der Generator 40 verwendet. Die Rotoren des Generators 40 und der Gasturbine 10 sind zu einem Strang starr oder über eine Kupplung oder Getriebe miteinander verbunden. Während des Anfahrverfahrens wird der Generator 40 nicht im Generatorbetrieb, sondern im Motorbetrieb betrieben. Dazu ist ein Anfahrumrichter 42 dem Generator 40 elektrisch zuschaltbar. Der Anfahrumrichter 42 kann eine dreiphasige Wechselspannung mit beliebiger Frequenz dem Generator 40 zuführen, wobei dieser frequenzabhängig dreht. Mit Hilfe des Anfahrumrichters 42 und des Generators 40 wird zum Anfahren der stationären Gasturbine 10 der Rotor 14 aus dem Stand angetrieben. Der Generator 40 dient dann als externer Drehantrieb. Dabei erzeugt der Generator 40 ein Antriebs-Drehmoment, welches auf den Gasturbinenrotor 14 einwirkt und diesen beschleunigt. Dieser Schritt ist als Schritt 50 in FIG 2 dargestellt. Das von der Drehzahl abhängige Drehmoment des Antrieb-Generators 40 ist in FIG 3 in strichpunktierter Linienart gezeigt. Die Kennlinie ist mit dem Bezugszeichen 46 versehen. Die in FIG 3 dargestellt Abszisse zeigt die normierte Drehzahl n/n₀ bezogen auf die Nenndrehzahl n₀, welche bei einer stationären Gasturbine, die für ein 50 Hz-Netz-Betrieb vorgesehen ist, bei 3000 min⁻¹ liegt.

Der erste Verfahrensschritt 50 endet mit dem Zünden von Brennstoff innerhalb der Gasturbine 10 bei einer ersten Rotordrehzahl. Damit beginnt auch unmittelbar der zweite Verfahrensschritt 52. Dieser beinhaltet den Weiterbetrieb der Verbrennung des der Gasturbine 10 kontinuierlich zugeführten Brennstoffs zu einem Heißgas M, wobei währenddessen ein von der Heißgasströmung in der Turbineneinheit 24 und von der Luftströmung im Verdichter 18 abhängiges Gasturbinen-Drehmoment zusätzlich auf den Rotor 14 einwirkt. In FIG 3 zeigt die Kennlinie 48 das Gasturbinen-Drehmoment in Abhängigkeit der normierten Drehzahl n/n₀.

Nach dem Zünden des Brennstoffs wird der Gasturbine 10 stetig eine größere Menge an Brennstoff über die Pilotbrenner und über die Hauptbrenner zugeführt, so dass das von der Heißgas-Strömung an den Rotor 14 in der Turbineneinheit 24 abgegebene Drehmoment stetig zunimmt. Gleichzeitig reduziert jedoch die Luft-Strömung im Verdichter 18 das Drehmoment, so dass auf den Rotor 14 der Gasturbine 10 sich ein resultierendes, von der Heißgasströmung in der Turbineneinheit 24 und von der Luftströmung im Verdichter 18 abhängiges Gasturbinen-Drehmoment einstellt. Dessen Verlauf in Abhängigkeit von der auf die Nenndrehzahl n₀ normierten Drehzahl n/n₀ zeigt in Figur 3 die Kennlinie 48.

Mit zunehmender Brennstoffmenge nimmt auch das resultierende Gasturbinen-Drehmoment prinzipiell zu. Gemäß FIG 3 wird bei einer normierten Drehzahl n/n₀ von etwa 40% ein positives Gasturbinen-Drehmoment erzeugt, was bedeutet, dass das von der Heißgas-Strömung in der Turbineneinheit 24 erzeugte Drehmoment größer ist als das Drehmoment, welches im Verdichter 10 aufgrund der Luftströmung bei der Verdichtung der Luft diesem entgegen wirkt. Ab diesem Zeitpunkt ist die Gasturbine 10 prinzipiell in der Lage, durch kontinuierliche Steigerung des Brennstoffmassenstroms den Rotor 14 weiter zu beschleunigen. Da jedoch das überschüssige Drehmoment anfänglich vergleichsweise gering ist, wurde bisher der Rotor 14 der Gasturbine 10 auch über diesen Punkt hinaus weiter vom Generator 40 angetrieben. Bisher war es so, dass mit Erreichen einer vorbestimmten Rotordrehzahl, die in der Regel zwischen 50 % und 80% der Nenndrehzahl n₀ lag, der Drehantrieb abgeschaltet wurde, in dem der Anfahrumrichter 42 vom Generator 40 getrennt wurde. Ab diesem Zeitpunkt wurde der Rotor 14 der Gasturbine 10 allein durch das bei der Verbrennung erzeugte Heißgas M angetrieben. Die Beschleunigung des Rotors 14 auf Nenndrehzahl n₀ erfolgte bisher allein durch die Steigerung des Brennstoffmassenstroms.

Erfindungsgemäß ist nun vorgesehen, dass der Drehantrieb länger als bisher die Beschleunigung des Rotors 14 unterstützt, beispielsweise bis 90% der Rotornenndrehzahl n₀. Vorzugsweise wird der Rotor 14 solange vom Drehantrieb angetrieben, bis der Rotor 14 die Nenndrehzahl n₀ erreicht hat. Dieser Verfahrensschritt ist in FIG 2 mit dem Bezugszeichen 54 versehen. Erst danach wird der Drehantrieb abgeschaltet.

Demgemäß stellt im gezeigten Ausführungsbeispiel der Anfahrumrichter 42 im erfindungsgemäßen Betrieb dem Generator 40 eine Frequenz zur Verfügung, mit der der Generator 40 den Rotor 14 bis auf Nenndrehzahl n₀ beschleunigen kann.

Dies kann einerseits dazu genutzt werden, um die Startzeit der stationären Gasturbine 10 signifikant zu verringern. Andererseits kann gemäß einer zweiten Ausführung das Verfahren dazu verwendet werden, die Verbrennungsleistung (thermische Leistung) der Gasturbine 10 so zu reduzieren, dass die Startzeiten nicht beeinträchtigt werden. Dadurch kann jedoch der zum Start benötigte maximale Brennstoffmassenstrom reduziert werden. Die Reduzierung des Brennstoffmassenstroms ermöglicht den Betrieb der stationären Gasturbine 10 an einem Brennstoffversorgungsnetz, welches einen geringeren maximalen Brennstoffversorgungsdruck aufweist als bisher. Zudem werden damit die Anfahremissionen begrenzt. Das Verfahren eignet sich insbesondere für gasförmige Brennstoffe.

Insgesamt betrifft die Erfindung ein Verfahren zum Anfahren einer stationären Gasturbine 10 mit einem Verdichter 18, einer Turbineneinheit 24 und einem Rotor 14, welcher von einem externen Drehantrieb aus dem Stand bis zu einer vorbestimmten Rotordrehzahl antreibbar ist, mit den Schritten:
- Drehen bzw. Antreiben des Rotors 14 durch einen externen Drehantrieb mit einem Antriebs-Drehmoment,
- Zünden von Brennstoff innerhalb der Gasturbine 10 bei einer ersten Rotordrehzahl und Weiterbetrieb der Verbrennung des der Gasturbine 10 kontinuierlich zugeführten Brennstoffs zu einem Heißgas M, wobei währenddessen ein von der Heißgas-Strömung in der Turbineneinheit 24 und der Luft-Strömung im Verdichter 18 abhängiges Gasturbinen-Drehmoment auf den Rotor 14 einwirkt sowie
- Abschalten des Drehantriebs bei einer vorbestimmten Rotordrehzahl, wodurch der Rotor 14 nur noch durch das bei der Verbrennung erzeugte Heißgas M angetrieben wird.

Um ein frühzeitigeres Erreichen der Nenndrehzahl der Gasturbine beim Anfahren der Gasturbine 10 aus dem Stand zu erreichen oder um Verbrennungsschwingungen und den Druck im Brennstoffversorgungssystem zu verringern, ist erfindungsgemäß vorgesehen, dass die vorbestimmte Rotordrehzahl größer ist als das 0,8-fache der Nenndrehzahl n₀ des Rotors 14.

## Patentansprüche

1. Verfahren zum Anfahren einer stationären Gasturbine (10) mit einem Verdichter (18), einer Turbineneinheit (24) und einem Rotor (14), welcher von einem externen Drehantrieb aus dem Stand bis zu einer vorbestimmten Rotordrehzahl antreibbar ist,
mit den Schritten,
- Drehen des Rotors (14) durch den externen Drehantrieb mit einem Antriebs-Drehmoment,
- Zünden von Brennstoff innerhalb der Gasturbine (10) bei einer ersten Rotordrehzahl und Weiterbetrieb der Verbrennung des der Gasturbine (10) kontinuierlich zugeführten Brennstoffs zu einem Heißgas (M), wobei währenddessen ein von der Heißgas-Strömung in der Turbineneinheit (24) und der Luft-Strömung im Verdichter (18) abhängiges Gasturbinen-Drehmoment auf den Rotor (14) einwirkt sowie
- Abschalten des Drehantriebs bei der vorbestimmten Rotordrehzahl, wonach der Rotor (14) allein durch das bei der Verbrennung erzeugte Heißgas (M) angetrieben wird,
**gekennzeichnet dadurch,**
**dass** die vorbestimmte Rotordrehzahl größer ist als das 0,8-fache der Nenndrehzahl (n₀) des Rotors (14).

2. Verfahren nach Anspruch 1,
bei dem die vorbestimmte Rotordrehzahl der Nenndrehzahl der Gasturbine (10) entspricht.

3. Verfahren nach Anspruch 1 oder 2,
bei dem der Rotor (14) durch einen Anfahrmotor angetrieben wird.

4. Verfahren nach Anspruch 1 oder 2,
bei dem der Rotor (14) durch einen an den Rotor (14) angekoppelten elektrischen Generator (40) angetrieben wird, welcher während des Anfahrens als elektrischer Motor betrieben wird.

5. Verfahren nach Anspruch 4,
bei dem die Drehzahl des Generators (40) durch einen Anfahrumrichter (42) einstellbar ist.

6. Verfahren nach einem der vorangehenden Ansprüche, welches zur Vermeidung von Verbrennungsinstabilitäten durchgeführt wird.
